# FASCICULE DE BREVET EUROPEEN

(11) **EP 4 444 556 B1**
(45) Date de publication et mention de la délivrance du brevet: **11.03.2026**
(21) Numéro de dépôt: 22834516.1
(22) Date de dépôt: 07.12.2022
(51) Int. Cl.: B60C 1/00, C08F 210/02, C08K 3/04, C08K 5/14, C08L 23/06, C08L 23/16, C08L 7/00

(54) **ARTICLE ANTIVIBRATOIRE COMPRENANT UNE COMPOSITION DE CAOUTCHOUC**
SCHWINGUNGSDÄMPFENDER GEGENSTAND ENTHALTEND EINE KAUTSCHUKZUSAMMENSETZUNG
ARTICLE ANTIVIBRATION CONTAINING A RUBBER COMPOSITION

(30) Priorité: 10.12.2021 FR 2113291
(43) Date de publication de la demande: 16.10.2024
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 CLERMONT-FERRAND CEDEX 09 (FR); HIDROT, Jean-Denis, 63040 CLERMONT-FERRAND CEDEX 09 (FR); CARNIOL, Natacha, 63040 CLERMONT-FERRAND CEDEX 09 (FR)
(74) Mandataire: M.F.P. Michelin
(86) Numéro de dépôt international: PCT/EP2022/084719
(87) Numéro de publication internationale: WO 2023/104851

(56) Documents cités:
- WO-A1-2020/038763

## Description

La présente invention est relative à des articles d'isolation des vibrations en caoutchouc.

Les articles antivibratoires en caoutchouc, également appelés amortisseurs de vibrations en caoutchouc, sont couramment utilisés, notamment dans le domaine de l'automobile, mais également dans tout élément subissant ou générant des vibrations. Ces articles permettent en particulier de réduire les vibrations provenant d'une source dite génératrice de vibrations d'une machine, telle qu'un moteur, afin d'éviter de détériorer d'autres éléments de la machine ou encore pour améliorer le confort de l'utilisateur.

Il est connu d'utiliser des copolymères d'éthylène-propylène-diène monomère (EPDM) comme principal composant d'articles antivibratoires, en raison de leur capacité à réduire les vibrations à des températures allant au-delà de 60°C. La demande KR10-2014-0078243 par exemple décrit des compositions pour articles antivibratoires comprenant de l'EPDM, du noir de carbone, une huile plastifiante et un système de réticulation.

Les articles antivibratoires en caoutchouc doivent présenter de nombreuses propriétés. Ils doivent présenter notamment une bonne résistance à l'ozone afin de limiter l'apparition de craquelures et retarder voire éviter le déchirement de ces articles.

Par ailleurs, ces articles doivent avantageusement présenter une faible dissipation énergétique lors de l'utilisation normale de la machine, c'est-à-dire à basses fréquences (de l'ordre de 1Hz), afin de limiter au maximum les échauffements et ainsi augmenter la durée de vie des articles antivibratoires. Ils doivent en revanche avantageusement présenter une forte dissipation énergétique à des fréquences élevées (entre 20 et 700 Hz) qui correspondent à des pics de vibrations pouvant atteindre la fréquence de résonance de l'article antivibratoire, et ce, afin de limiter au maximum les vibrations transmises au reste de la machine et potentiellement à l'utilisateur de la machine, et potentiellement également afin de réduire les nuisances sonores perçues par l'utilisateur.

Ainsi, les manufacturiers cherchent toujours des solutions pour augmenter la durée de vie des articles antivibratoires, par exemple en améliorant la résistance à l'ozone et/ou en diminuant la dissipation énergétique à basses fréquences, tout en réduisant davantage les vibrations à hautes fréquences.

Poursuivant ses recherches, la Demanderesse a découvert de façon inattendue que l'utilisation d'un copolymère fortement saturé particulier permet de résoudre ce problème technique.

Ainsi, l'invention a pour objet un article en caoutchouc antivibratoire comprenant une composition de caoutchouc à base d'au moins :
- une matrice élastomère comprenant au moins un copolymère contenant des unités éthylène et des unités 1,3-diène, la fraction molaire des unités éthylène dans le copolymère étant compris dans un domaine allant de plus de 50% à 95%,
- une charge renforçante comprenant au moins un noir de carbone dont la surface spécifique BET est comprise entre 5 et 110 m²/g,
- un système de réticulation comportant au moins un peroxyde et un co-agent de réticulation choisi dans le groupe constitué par les composés (méth)acrylates, les composés maléimides, les composés allyliques, les composés vinyliques et leurs mélanges,
ledit article étant choisi dans le groupe constitué par les appuis en caoutchouc, supports en caoutchouc, douilles en caoutchouc, coussinets en caoutchouc, paliers en caoutchouc, poulies d'amortisseurs en caoutchouc, tuyaux en caoutchouc, tampons en caoutchouc et panneaux anti-vibrations en caoutchouc.

### I- DÉFINITIONS

Par l'expression « à base de » utilisée pour définir les constituants d'un système catalytique ou d'une composition, on entend le mélange de ces constituants, ou le produit de la réaction d'une partie ou de la totalité de ces constituants entre eux, au moins partiellement, lors des différentes phases de fabrication du système catalytique ou de la composition. Dans le cas d'une composition, celle-ci peut ainsi être à l'état totalement ou partiellement réticulé ou à l'état non-réticulé.

Par « matrice élastomère », on entend l'ensemble des élastomères de la composition, y compris le copolymère défini ci-dessous.

Sauf indication contraire, les taux des unités résultant de l'insertion d'un monomère dans un copolymère sont exprimés en pourcentage molaire par rapport à la totalité des unités monomères du copolymère.

Par l'expression « partie en poids pour cent parties en poids d'élastomère » (ou pce), il faut entendre au sens de la présente invention, la part, en masse pour cent parties d'élastomère présent dans la composition de caoutchouc considérée.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indications contraires, toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomère

Selon l'invention, la matrice élastomère de la composition comprend au moins un copolymère contenant des unités éthylène et des unités 1,3-diène, la fraction molaire des unités éthylène dans le copolymère étant compris dans un domaine allant de plus de 50% à 95%.

Dans la présente, le « copolymère contenant des unités éthylène et des unités 1,3-diène, la fraction molaire des unités éthylène dans le copolymère étant compris dans un domaine allant de plus de 50% à 95% » pourra être désigné par « le copolymère » ou par « le copolymère contenant des unités éthylène et des unités 1,3-diène » pour un souci de simplification de rédaction.

Par « copolymère contenant des unités éthylène et des unités 1,3-diène », on entend tout copolymère comprenant, au sein de sa structure, au moins des unités éthylène et des unités 1,3-diène. Le copolymère peut ainsi comprendre des unités monomères différentes des unités éthylène et des unités 1,3-diène. Par exemple, le copolymère peut comprendre également des unités alpha-oléfine, notamment des unités alpha-oléfine ayant de 3 à 18 atomes de carbone, avantageusement ayant de 3 à 6 atomes de carbone. Par exemple, les unités alpha-oléfine peuvent être choisies dans le groupe constitué par le propylène, le butène, le pentène, l'hexène ou leurs mélanges.

De manière connue, l'expression « unité éthylène » fait référence au motif -(CH₂-CH₂)-résultant de l'insertion de l'éthylène dans la chaîne élastomère.

De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ou d'un mélange de 1,3-diènes, le ou les 1,3-diènes ayant de 4 à 12 atomes de carbone, tels que tout particulièrement le 1,3-butadiène et l'isoprène. De préférence, les unités 1,3-diène sont des unités 1,3-butadiène.

Avantageusement, les unités éthylène dans le copolymère représentent entre 55% et 90% en mole des unités monomères du copolymère.

Avantageusement, le copolymère contenant des unités éthylène et des unités 1,3-diène est un copolymère d'éthylène et de 1,3-diène, de préférence un copolymère d'éthylène et de 1,3-butadiène, c'est-à-dire que le copolymère ne contient pas d'unités autres que l'éthylène et le 1,3-diène, de préférence pas d'unités autres que l'éthylène et le 1,3-butadiène.

Lorsque le copolymère est un copolymère d'éthylène et d'un 1,3-diène, celui-ci contient avantageusement des unités de formule (I) et/ou (II). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

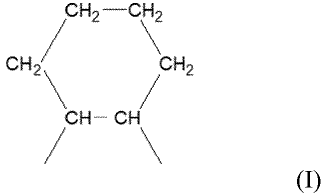

-CH₂-CH(CH=CH₂)- (II)

Par exemple, le copolymère d'éthylène et d'un 1,3-diène peut être dépourvu d'unités de formule (I). Dans ce cas, il contient de préférence des unités de formule (II).

Lorsque le copolymère d'éthylène et d'un 1,3-diène comprend des unités de formule (I) ou des unités de formule (II) ou encore des unités de formule (I) et des unités de formule (II), les pourcentages molaires des unités de formule (I) et des unités de formule (II) dans le copolymère, respectivement o et p, satisfont de préférence à l'équation suivante (eq. 1), de manière plus préférentielle à l'équation (eq. 2), o et p étant calculés sur la base de l'ensemble des unités monomères du copolymère. $0 < o + p \leq 25$ $0 < o + p < 20$

Selon l'invention, le copolymère, de préférence le copolymère d'éthylène et d'un 1,3-diène (de préférence de 1,3-butadiène), est un copolymère statistique.

Avantageusement, la masse moyenne en nombre (Mn) du copolymère, de préférence du copolymère d'éthylène et d'un 1,3-diène (de préférence de 1,3-butadiène) est comprise dans un domaine allant de 100 000 à 300 000 g/mol, de préférence de 150 000 à 250 000 g/mol.

La Mn du copolymère est déterminée de manière connue, par chromatographie d'exclusion stérique (SEC) telle que décrite dans les exemples.

Le copolymère peut être obtenu selon différentes méthodes de synthèse connues de l'homme du métier, notamment en fonction de la microstructure visée du copolymère. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. Le copolymère, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère peut être constitué d'un mélange de copolymères contenant des unités éthylène et des unités diéniques qui se différencient des uns des autres par leurs microstructures et/ou par leurs macrostructures.

Avantageusement, le taux du copolymère contenant des unités éthylène et des unités 1,3-diène dans la composition est compris dans un domaine allant de 30 à 100 pce, de 50 à 100 pce, de préférence de 80 à 100 pce. La matrice élastomère peut avantageusement comprendre uniquement, à titre d'élastomère, le copolymère contenant des unités éthylène et des unités 1,3-diène. Les compositions selon l'invention comprenant plus de 50 pce, de préférence plus de 80 pce du copolymère contenant des unités éthylène et de 1,3-diène sont particulièrement avantageuses pour être utilisés dans des articles antivibratoires destinés à subir des températures supérieures à 85°C.

Alternativement, la matrice élastomère peut comprendre en outre un élastomère diénique différent du copolymère contenant des unités éthylène et des unités 1,3-diène (également appelé dans la présente « l'autre élastomère »).

Lorsque la composition comprend un autre élastomère, le taux du copolymère contenant des unités éthylène et des unités 1,3-diène dans la composition peut être compris dans un domaine allant de 30 à 90 pce, de préférence de 50 à 80 pce, le taux de l'autre élastomère étant compris dans un domaine allant de 10 à 70 pce, de préférence de 20 à 50 pce.

L'autre élastomère de la matrice élastomère du pneumatique selon l'invention est choisi préférentiellement dans le groupe des élastomères diéniques fortement insaturés tels que les polybutadiènes (en abrégé "BR"), les polyisoprènes (IR) de synthèse, le caoutchouc naturel (NR), les copolymères de butadiène, les copolymères d'isoprène et les mélanges de ces élastomères. On entend en général par "élastomère diénique fortement insaturé", un élastomère diénique issu au moins en partie de monomères diènes conjugués, ayant un taux de motifs ou unités d'origine diénique (diènes conjugués) qui est supérieur à 50% (% en moles).

De préférence l'autre élastomère est choisi dans le groupe constitué par les polyisoprène présentant ayant un taux molaire de liaisons cis-1,4 supérieur à 90%. Il peut s'agir de polyisoprène de synthèse, de caoutchouc naturel ou d'un de leurs mélanges. De préférence, l'autre élastomère est un caoutchouc naturel.

### II-2 Charge renforçante

Selon l'invention, la composition comprend une charge renforçante comprenant au moins un noir de carbone dont la surface spécifique BET est comprise entre 5 et 110 m²/g.

Les noirs utilisables dans le cadre de la présente invention peuvent être tout noir conventionnellement utilisé dans les bandages pneumatiques ou non-pneumatiques ou leurs bandes de roulement (noirs dits de grade pneumatique). Parmi ces derniers, on citera plus particulièrement les noirs de carbone renforçants des séries 300, 400, 500, 600 ou 700 (grades ASTM), comme par exemple les noirs N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). Des mélanges de plusieurs noirs de carbone peuvent également être utilisés dans les taux prescrits.

Avantageusement, ledit noir de carbone présente une spécifique BET comprise entre 10 et 100 m²/g, de préférence entre 20 et 80 m²/g, de préférence encore entre 20 et 70 m²/g. La surface spécifique BET des noirs de carbone est mesurée selon la norme ASTM D6556-10 [méthode multipoints (au minimum 5 points) - gaz : azote - domaine de pression relative P/P0 : 0.1 à 0.3].

Le noir de carbone, de préférence ledit noir de carbone, peut représenter plus de 50%, de préférence plus de 80%, voire 100%, en poids de la charge renforçante.

La charge renforçante peut également comprendre de la silice à titre de charge renforçante, c'est-à-dire de la silice utilisée en combinaison avec un agent de couplage bien connu de l'homme du métier.

La silice peut être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment de 60 à 300 m²/g. La silice présente avantageusement une surface spécifique BET comprise dans un domaine allant de 125 à 200 m²/g et/ou une surface spécifique CTAB comprise dans un domaine allant de 140 à 170 m²/g.

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB de la silice ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Lorsque de la silice est utilisée, elle représente avantageusement de 5% à 50%, de préférence de 10% à 40% en poids de la charge renforçante.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Lorsque de la silice est utilisée, la teneur en agent de couplage dans la composition selon l'invention peut aisément être ajustée par l'homme du métier. Typiquement le taux d'agent de couplage représente de 0,5% à 15% en poids par rapport à la quantité de silice.

De préférence, le taux dudit noir de carbone, de préférence le taux de charge renforçante, dans la composition selon l'invention est compris entre 20 et 70 pce, de préférence dans un domaine allant de 30 à 60 pce. Lorsque ledit noir de carbone est la seule charge renforçante, son taux dans la composition est préférentiellement compris entre 20 et 70 pce, de préférence dans un domaine allant de 30 à 60 pce.

Lorsque de la silice est présente dans la composition, le taux de noir de carbone peut être compris dans un domaine allant de 19 à 69 pce, de préférence de 27 à 57 pce, et le taux de silice dans un domaine allant de 1 à 35 pce, de préférence de 3 à 24 pce.

### II-3 Système de réticulation

Selon l'invention, le système de réticulation de la composition comprend au moins un peroxyde et un co-agent de réticulation choisi dans le groupe constitué par les composés (méth)acrylates, les composés maléimides, les composés allyliques, les composés vinyliques et leurs mélanges.

### Peroxyde

Avantageusement, le peroxyde est un peroxyde organique.

Par « peroxyde organique », on entend un composé organique, c'est-à-dire contenant du carbone, comportant un groupe -O-O- (deux atomes d'oxygène liés par une liaison covalente simple). Durant le procédé de réticulation, le peroxyde organique se décompose au niveau de sa liaison instable O-O en radicaux libres. Ces radicaux libres permettent la création des liaisons de réticulation.

Le peroxyde organique est de préférence choisi dans le groupe comprenant ou consistant en les peroxydes de dialkyle, les monoperoxycarbonates, les peroxydes de diacyle, les peroxycétales ou les peroxyesters.

De préférence, les peroxydes de dialkyle sont choisis dans le groupe comprenant ou consistant en le peroxyde de dicumyle, le peroxyde de di-t-butyle, peroxyde de t-butylcumyle, le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amyl-peroxy)isopropyl] benzène, le peroxyde de di-t-amyle, le 1,3,5-tri-[(t-butylperoxy)isopropyl]benzène, le 1,3-diméthyl-3-(t-butylperoxy)butanol, et le 1,3-diméthyl-3-(t -amylperoxy) butanol.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe comprenant ou consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane et leurs mélanges. De préférence, les peroxyesters sont choisis dans le groupe consistant en le tert-butylperoxybenzoate, le tert-butyleperoxy-2-ethylhexanoate et le tert-butyleperoxy-3,5,5-triméthylehexanoate.

En résumé, le peroxyde organique est, de manière particulièrement préférée, choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges. De préférence encore le peroxyde organique est choisi dans le groupe constitué par dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

A titre d'exemple de peroxyde utilisable dans le cadre de la présente invention et disponible dans le commerce, on peut citer le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Le taux de peroxyde dans la composition est avantageusement compris dans un domaine allant de 0,5 à 10 pce, de préférence de 1 à 5 pce.

### Co-agent de réticulation

Selon l'invention, le co-agent de réticulation est choisi dans le groupe constitué par les composés (méth)acrylates, les composés maléimides, les composés allyliques, les composés vinyliques et leurs mélanges.

De préférence, le co-agent comprend un composé (méth)acrylate, sous forme de sel métallique, ou d'ester ou sous forme polymérique.

De préférence encore, le co-agent de réticulation comprend un dérivé d'acrylate de formule (III) :

**[X]ₚ A** (III)

dans laquelle,
- [X]p correspond à un radical de formule (IV) : 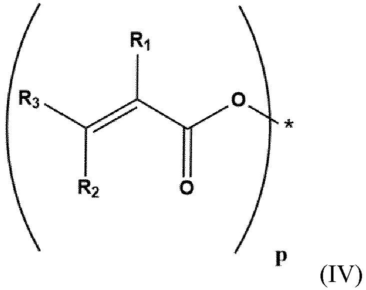 dans laquelle,
   ° ∘ R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
   ° ∘ (*) représente le point d'attachement du radical de formule (IV) à A,
- A représente un atome appartenant au groupe constitué par les métaux alcalino-terreux ou les métaux de transition, un atome de carbone, ou un groupement hydrocarboné en C₁-C₃₀ éventuellement interrompu et/ou substitué par un ou plusieurs hétéroatomes,
- A comprenant p valences libres, p ayant une valeur allant de 2 à 6,
- étant entendu que les 2 à 6 radicaux X sont identiques ou différents.

Selon l'invention, la liaison entre X et A peut être une liaison ionique ou une liaison covalente. L'homme du métier comprend bien que lorsque A représente un atome appartenant au groupe constitué par les métaux alcalino-terreux ou les métaux de transition, notamment Zn ou Mg, la liaison entre X et A est une liaison ionique. Par ailleurs, lorsque A représente un atome de carbone ou un groupement hydrocarboné en C₁-C₃₀, l'homme du métier comprend bien que la liaison entre X et A est une liaison covalente.

Par groupe alkyle cyclique, on entend un groupe alkyle comprenant un ou plusieurs cycles.

Par groupement ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Par groupement ou chaîne hydrocarboné(e) substitué(e) par un ou plusieurs hétéroatomes, on entend un groupe ou chaîne comprenant un ou plusieurs hétéroatomes, chaque hétéroatome étant lié au groupement ou à la chaîne hydrocarboné(e) par une liaison covalente sans interrompre le groupement ou la chaîne hydrocarboné(e).

Le ou les hétéroatomes de A peuvent être choisis dans le groupe constitué par les atomes d'oxygène, de soufre, d'azote, de silicium, de phosphore et leurs combinaisons. De préférence, le ou les hétéroatomes de A sont choisis dans le groupe constitué par atomes d'oxygène et de soufre. De préférence encore, le ou les hétéroatomes de A sont des atomes d'oxygène.

En d'autres termes, A représente avantageusement un groupement hydrocarboné en C₄-C₃₀, linéaire, ramifié ou cyclique, interrompu et/ou substitué par un ou plusieurs hétéroatomes choisis parmi les atomes d'oxygène, de soufre, d'azote, de silicium, de phosphore et leurs combinaisons, de préférence choisis dans le groupe constitué par atomes d'oxygène et de soufre. De préférence encore A représente avantageusement un groupement hydrocarboné en C₄-C₃₀, linéaire, ramifié ou cyclique, de préférence, linéaire ou ramifié, interrompu et/ou substitué par un ou plusieurs atomes d'oxygène et/ou de soufre, de préférence interrompu et/ou substitué par un ou plusieurs atomes d'oxygène.

De préférence, A représente un groupement hydrocarboné en C₄-C₃₀, linéaire, ramifié ou cyclique, de préférence linéaire ou ramifié, interrompu par un ou plusieurs atomes d'oxygène et/ou de soufre, de préférence interrompu par un ou plusieurs atomes d'oxygène. De préférence encore, A représente un groupement hydrocarboné en C₄-C₃₀, linéaire ou ramifié, interrompu par un ou plusieurs atomes d'oxygène.

Lorsque A représente un groupement hydrocarboné en C₄-C₃₀, il peut s'agir par exemple d'un groupement hydrocarboné en C₅-C₂₀, de préférence en C₆-C₁₆.

Lorsque A comprend un groupement hydrocarboné cyclique, il peut s'agir d'un groupement hydrocarboné cyclique non-aromatique ou aromatique.

Le ou les hétéroatomes des radicaux R₁, R₂, R₃ et A peuvent être, indépendamment les uns des autres, des atomes d'oxygène, de soufre, d'azote, de phosphore ou de silicium, de préférence des atomes d'oxygène ou d'azote.

Quelle que soit la nature du radical A, R₁, R₂ et R₃ peuvent représenter indépendamment les uns des autres un atome d'hydrogène, un groupement méthyle ou un groupement éthyle, de préférence R₁, R₂ et R₃ représentent indépendamment les uns des autres un atome d'hydrogène ou un groupement méthyle.

Avantageusement, R₁ peut représenter un groupement méthyle et R₂ et R₃ peuvent représenter chacun un atome d'hydrogène. Alternativement, R₁, R₂ et R₃ peuvent représenter chacun un atome d'hydrogène.

Le nombre de valence p dépend de la nature du radical A. Selon l'invention, p peut valoir 2, 3, 4, 5 ou 6. De préférence, p vaut 2, 3 ou 4, de préférence 2 ou 3, de préférence 2.

Avantageusement, dans lequel dans le dérivé d'acrylate de formule (III), quels que soient les groupements R₁, R₂ et R₃ :
- A représente un atome appartenant au groupe constitué par les métaux alcalino-terreux ou les métaux de transition, un atome de carbone ou un groupement hydrocarboné en C₁-C₁₃, de préférence en C₁-C₈,
- A comprenant p valences libres, p ayant une valeur allant de 2 à 4,
- étant entendu que les 2 à 4 radicaux X sont identiques ou différents, de préférences identiques.

Selon l'invention, lorsque A représente un atome appartenant au groupe constitué par les métaux alcalino-terreux ou les métaux de transition, il peut s'agir par exemple d'un atome choisi dans le groupe constitué par Zn, Mg et Fe, de préférence dans le groupe constitué par Zn et Mg.

Lorsque A représente un groupement hydrocarboné en C₁-C₁₃, de préférence C₁-C₈, il peut s'agir par exemple d'un groupement hydrocarboné en C₁-C₇, de préférence en C₁-C₆.

A peut représenter un groupement hydrocarboné en C₁-C₁₃ choisi dans le groupe constitué par les radicaux suivants : 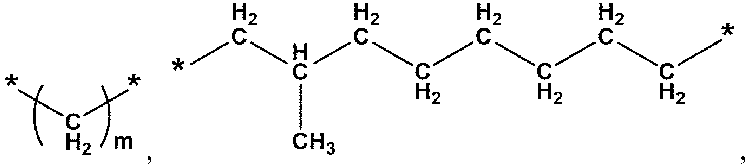 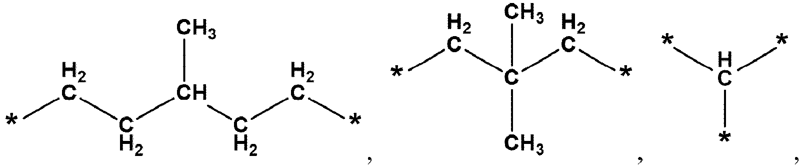 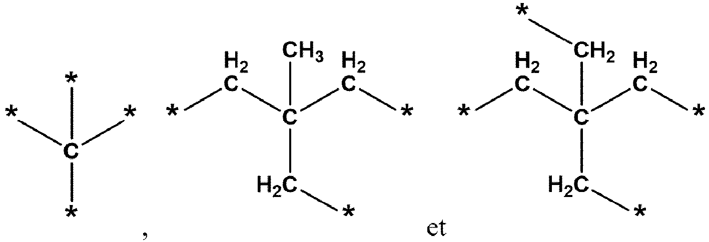 dans lesquels, m est un nombre entier allant de 1 à 13, et (*) représente le point d'attachement de A au radical de formule (IV).

Avantageusement, le groupement hydrocarboné en C₁-C₁₃ est un radical *-(CH₂)ₘ-* dans lequel, m est un nombre entier allant de 1 à 13, de préférence de 1 à 8, de préférence de 1 à 6, et (*) représente le point d'attachement de A au radical de formule (III).

Ainsi, selon l'invention, le dérivé d'acrylate de formule (III) peut être choisi parmi le diméthacrylate de zinc (ZDMA), le diméthacrylate de magnésium (MgDMA), le diacrylate de zinc (ZDA), le diacrylate de magnésium (MgDA), le triméthylopropane triméthylacrylate (TMPTMA), triméthylolproprane triacrylate (TMPTA), le 1,6-hexanediol diacrylate (HDDA) et leurs mélanges. De préférence, le dérivé d'acrylate de formule (III) peut être choisi parmi le diméthacrylate de zinc (ZDMA), le diacrylate de zinc (ZDA), le triméthylopropane triméthylacrylate (TMPTMA) et leurs mélanges.

A titre d'exemple, on trouve dans le commerce des dérivés de diacrylate tels que le diacrylate de zinc (ZDA) « DYMALINK 633 » de la société Cray Valley, le diméthacrylate de zinc (ZDMA) « DYMALINK 634 » de la société Cray Valley, le triméthylolpropane triméthacrylate (TMPTMA) « SR351 » de la société Sartomer, ou le 1,6-hexanediol diacrylate (HDDA) de la société Sigma-Aldrich.

Avantageusement, le taux de co-agent de réticulation dans la composition selon l'invention, est compris dans un domaine allant de 1 à 20 pce, de préférence de 2 à 10 pce, de préférence entre 2 et 5 pce.

De manière avantageuse, la quantité de peroxyde dans la composition est comprise dans un domaine allant de 10% à 100% en poids, de préférence entre 20% à 80% en poids, par rapport au poids de co-agent de réticulation dans la composition.

Avantageusement également, le rapport du taux de charge renforçante sur le taux du co-agent de réticulation est compris dans un domaine allant de 3 à 40 de préférence de 6 à 30.

### Soufre

Par ailleurs, la composition selon l'invention est avantageusement exempte de soufre en tant qu'agent de vulcanisation, ou en contenir moins de 0,5 pce, de préférence moins de 0,3 pce, de préférence moins de 0,2 pce et de préférence moins de 0,1 pce. Le soufre peut être du soufre moléculaire ou provenir d'un agent donneur de soufre, tel que les alkyl phénol disulfures (APDS).

### II-4 Additifs possibles

Les compositions de caoutchouc destinées à être utilisées dans des articles antivibratoires peuvent comporter optionnellement également tout ou partie des additifs usuels habituellement utilisés dans les compositions d'élastomères pour de tels articles, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269) ou encore des agent gonflants.

### II-5 Préparation des compositions de caoutchouc

Les compositions conformes à l'invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui peut être réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme panneaux anti-vibrations, bandes anti-vibration ou coussinets d'isolation (« pads » en anglais). La composition finale peut alternativement être moulée et réticulées selon des techniques connues de l'homme du métier afin de produire des supports (« mount » en anglais), des douilles (ou bagues, « bushes » en anglais). Ces produits peuvent ensuite être utilisés pour la fabrication d'articles antivibratoires, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé comme article antivibratoire, ou dans un article antivibratoire, par exemple associé à une pièce métallique, l'ensemble constituant l'article antivibratoire.

La réticulation de la composition peut être conduite de manière connue de l'homme du métier, par exemple à une température comprise entre 100°C et 200°C, sous pression.

### II-6 Articles antivibratoire

Les compositions de caoutchouc conformes à l'invention trouvent de nombreuses applications dans les articles ou dispositifs antivibratoires, notamment en tant qu'isolateur ou amortisseur de vibrations.

La présente invention a pour objet un article antivibratoire comprenant au moins un élément en caoutchouc selon l'invention, ledit article étant choisi dans le groupe constitué par les appuis en caoutchouc, supports en caoutchouc, douilles en caoutchouc, coussinets en caoutchouc, paliers en caoutchouc, poulies d'amortisseurs en caoutchouc, tuyaux en caoutchouc, tampons en caoutchouc et panneaux anti-vibrations en caoutchouc.

Les appuis en caoutchouc peuvent être par exemples des appuis antisismiques, des appuis pour ponts. Les supports en caoutchouc peuvent être des supports de toutes formes, par exemples des supports cylindriques ou des support coniques. Les coussinets en caoutchouc peuvent être par exemple des coussinets nervurés, des coussinets sandwich ou encore des coussinets multicouches nervurés. Les paliers en caoutchouc peuvent être des paliers centraux ou des paliers à glissières.

De préférence, l'article antivibratoire comprenant au moins un élément en caoutchouc est choisi dans le groupe constitué par les supports en caoutchouc et les panneaux anti-vibrations. De préférence, il s'agit d'un panneaux anti-vibrations.

### IV- EXEMPLES

### IV-1 Mesures et tests utilisés

### Détermination de la microstructure des élastomères :

La microstructure des copolymères d'éthylène et de butadiène est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone. Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Dans les deux cas (échantillon soluble ou échantillon gonflé). Pour la RMN du proton est utilisée une séquence simple impulsion de 30°. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

### Détermination de la macrostructure des polymères par chromatographie d'exclusion stérique (SEC) :

### a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

### b) Préparation du polymère :

Chaque échantillon est solubilisé dans du tétrahydrofurane à une concentration d'environ 1 g/L. Puis la solution est filtrée sur filtre de porosité 0.45µm avant injection.

### c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min⁻¹, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 µL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

### Résistance à l'ozone :

Les mesures de la résistance à l'ozone ont été réalisées selon la norme ANF ISO 1431-1 (2012) sur des éprouvettes B15 type FTFT. Les éprouvettes ont été soumises à une concentration en ozone de 50 ppcm (parties pour cent millions), à une température de 40°C, pendant une durée allant jusqu'à 14 jours, à 10% d'élongation.

Les éprouvettes sont issues d'une plaque MFTR (appelée Monsanto) dont les deux bourrelets situés aux extrémités servent au maintien de l'éprouvette. Leurs dimensions sont les suivantes : 78,5mm *20mm*1,5mm.

L'aspect des éprouvettes a été observé à la loupe avec un grossissement x5 et a été noté selon la terminologie décrite dans l'annexe C de la norme précitée, à savoir :
Taille des craquelures
0 : aucune craquelure
1 : craquelure visible avec un grossissement
2 : craquelure visible à l'œil nu mais très petite (inférieure à 0,5 mm)
3 : toute craquelure plus importante
R : rupture de l'éprouvette

### Dissipation énergétique :

Des compositions de caoutchouc ont été testées en double cisaillement selon la norme ASTM D5992-96 (2011). Une éprouvette de double cisaillement est constituée de deux disques d'élastomère collés entre trois armatures cylindriques métalliques. Les disques collés ont un diamètre de 8,62 mm (diamètre de l'emporte-pièce).

Les conditions retenues pour l'essai de balayage en amplitude dynamique sont les suivantes :
- Moyen d'essai : viscoanalyseur Metravib DMA + 450,
- Type de sollicitation : cisaillement simple,
- Type de porte-échantillon : montage de double cisaillement ; entrefer de 3,5 mm,
- Gamme de température : ambiante (23±2°C),
- Conditionnement thermique : aucun,
- Fréquence de sollicitation : 1 Hz, 95 Hz
- Grandeur statique régulée : aucune,
- Grandeur dynamique régulée : amplitude de déformation de ± 0,1 % jusqu'à ± 100 % (aller/retour)
- Disques collés de diamètre 8,62 mm et d'épaisseur 2 mm,

Les facteurs de perte tan(δ) reportés dans le Tableau 1 sont issus de la courbe aller mesurée à une amplitude de 4% de déformation sur des éprouvettes neuves à deux fréquences, à savoir respectivement 1 Hz et 95Hz.

La performance du facteur de perte tan(δ) 1Hz est calculé selon la formule : (Facteur de perte tan(δ) 1Hz témoin)/ (Facteur de perte tan(δ) 1Hz mélange)*100. Une valeur supérieure à 100 traduit une moindre dissipation du mélange et donc un meilleur fonctionnement à plus basse température en continu.

La performance du facteur de perte tan(δ) 95Hz est calculé selon la formule : (Facteur de perte tan(δ) 95Hz mélange)/ (Facteur de perte tan(δ) 95Hz témoin)*100. Une valeur supérieure à 100 traduit une plus grande dissipation énergétique du matériau et donc un meilleur amortissement en fréquence.

### IV-2 Préparation des compositions

Dans les exemples qui suivent, les compositions caoutchouteuses ont été réalisées comme décrit au point II-5 ci-dessus. En particulier, la phase « non-productive » a été réalisée dans un mélangeur de 2,5 litres pendant 3,5 minutes, pour une vitesse moyenne de palettes de 50 tours par minute jusqu'à atteindre une température maximale de tombée de 160°C. La phase « productive » a été réalisée dans un outil à cylindre à 23°C pendant 5 minutes.

La réticulation de la composition a été conduite à une température comprise de 160°C pendant 50 minutes, sous pression.

### IV-3 Essais de compositions de caoutchouc

Les exemples présentés ci-dessous ont pour objet de comparer la résistance à l'ozone, et la dissipation énergétique à 1Hz et 95Hz de deux compositions conformes à la présente invention (C1 et C2) avec deux compositions témoin (T1 et T2) qui ne diffèrent respectivement des compositions conformes à l'invention que par la nature du copolymère.

Le Tableau 1 présente les compositions testées (en pce), ainsi que les résultats obtenus.

Les résultats de performance de facteur de perte à 1Hz et 95Hz sont exprimés en pourcentage base 100 par rapport à la composition témoin T1 pour la composition C1 ou T2 pour la composition C2.

**[Tableau 1]**

| | **T1** | **C1** | **T2** | **C2** |
|---|---|---|---|---|
| NR (1) | | | 70 | 70 |
| EPDM (2) | 100 | | 30 | |
| EBR (3) | | 100 | | 30 |
| N550 (4) | 30 | 30 | 30 | 30 |
| ZnO (5) | 5 | 5 | 5 | 5 |
| Acide stéarique (6) | 2 | 2 | 2 | 2 |
| TMQ (7) | 1 | 1 | 1 | 1 |
| 6PPD (8) | 1 | 1 | 1 | 1 |
| Cire anti-ozone (9) | 2 | 2 | 2 | 2 |
| Peroxyde (10) | 3 | 3 | 3 | 3 |
| ZDA (11) | 4 | 4 | 4 | 4 |
| | | | | |
| Test Ozone | 0 | 0 | 0 | 0 |
| Performance tan(δ) 1Hz | 100 | 134 | 100 | 124 |
| Performance tan(δ) 95Hz | 100 | 97 | 100 | 98 |

| | | | | |
|---|---|---|---|---|
| (1) Caoutchouc naturel (2) EPDM « Keltan 3960Q » de la société Lanxess (3) Copolymère éthylène-butadiène à 80% molaire de motifs éthylénique préparé selon un procédé de polymérisation d'éthylène et de butadiène conforme à l'exemple 4-2 du brevet EP 1 954 705 B1 au nom des Demanderesses, le temps de polymérisation étant ajusté de manière à obtenir une masse molaire Mn = 153 000 g/mol avec un indice de polydispersité égal à 1.9 (4) Noir de carbone de grade N550 selon la norme ASTM D-1765 (5) Oxyde de zinc de grade industriel de la société Umicore (6) acide stéarique « Pristerene 4931 » de la société Uniqema (7) 2,2,4-triméthyl-1,2-dihydroquinoline « Pilnox TMQ » de la société Nocil (8) N-1,3-diméthylbutyl-N-phénylparaphénylènediamine « Santoflex 6-PPD » de la société Flexsys (9) Cire anti-oxydante « Cera SER AO 32 » de la société SER Wax Industry (10) 1, 3/1, 4-bis(tert-butylperoxyisopropyl)benzene « Luperox F40 » de la société Arkema (11) Diacrylate de zinc (ZDA) « Dymalink SR633 » de la société Cray Valley | | | | |

Les résultats présentés dans le Tableau 1 ci-dessus montrent que le copolymère conforme à l'invention est aussi bon que l'EPDM vis-à-vis de la résistance à l'ozone. Toutefois, les compositions conformes à l'invention présentent une moindre dissipation énergétique à 1Hz, c'est-à-dire dans des conditions courantes de fonctionnement, sans quasiment impacter la dissipation énergétique à 95 Hz, c'est-à-dire dans des conditions sévères de fonctionnement. Ainsi, les compositions conformes à l'invention présentent une meilleure durée de vie, du fait de leur moindre échauffement en continu tout en maintenant en excellent niveau de réduction des vibrations à hautes fréquences.

## Revendications

1. Article antivibratoire comprenant au moins un élément en caoutchouc qui comprend une composition de caoutchouc à base d'au moins :
- une matrice élastomère comprenant au moins un copolymère contenant des unités éthylène et des unités 1,3-diène, la fraction molaire des unités éthylène dans le copolymère étant compris dans un domaine allant de plus de 50% à 95%,
- une charge renforçante comprenant au moins un noir de carbone dont la surface spécifique BET est comprise entre 5 et 110 m²/g, (mesurée selon la norme ASTM D6556-10")
- un système de réticulation comportant au moins un peroxyde et un co-agent de réticulation choisi dans le groupe constitué par les composés (méth)acrylates, les composés maléimides, les composés allyliques, les composés vinyliques et leurs mélanges,
ledit article étant choisi dans le groupe constitué par les appuis en caoutchouc, supports en caoutchouc, douilles en caoutchouc, coussinets en caoutchouc, paliers en caoutchouc, poulies d'amortisseurs en caoutchouc, tuyaux en caoutchouc, tampons en caoutchouc et panneaux anti-vibrations en caoutchouc.

2. Article antivibratoire selon la revendication 1, dans lequel le copolymère contenant des unités éthylène et des unités 1,3-diène est un copolymère d'éthylène et de 1,3-diène.

3. Article antivibratoire selon l'une quelconque des revendications précédentes, dans lequel les unités 1,3-diène sont des unités 1,3-butadiène.

4. Article antivibratoire selon l'une quelconque des revendications précédentes, dans lequel le copolymère contenant des unités éthylène et des unités 1,3-diène est un copolymère statistique.

5. Article antivibratoire selon l'une quelconque des revendications précédentes, dans lequel le taux du copolymère contenant des unités éthylène et des unités 1,3-diène est compris dans un domaine allant de 30 à 100 pce, de préférence de 50 à 100 pce.

6. Article antivibratoire selon l'une quelconque des revendications précédentes, dans lequel le noir de carbone présente une spécifique BET comprise entre 10 et 100 m²/g, de préférence entre 20 et 80 m²/g, de préférence encore entre 20 et 70 m²/g.

7. Article antivibratoire selon l'une quelconque des revendications précédentes, dans lequel le taux du noir de carbone est compris entre 20 et 70 pce, de préférence dans un domaine allant de 30 à 60 pce.

8. Article antivibratoire selon l'une quelconque des revendications précédentes, dans lequel le peroxyde est un peroxyde organique choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et leurs mélanges, de préférence dans le groupe consistant en le peroxyde de dicumyle, le n-butyl-4,4'-di(tert-butylperoxy)-valérate, le OO-(t-butyl) 0-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et leurs mélanges.

9. Article antivibratoire selon l'une quelconque des revendications précédentes, dans lequel le taux de peroxyde est compris dans un domaine allant de 0,5 à 10 pce, de préférence de 1 à 5 pce.

10. Article antivibratoire selon l'une quelconque des revendications précédentes, dans lequel le co-agent de réticulation comprend un dérivé d'acrylate de formule (III) :
**[X]p A** (III)
dans laquelle :
∘ [X]p correspond à un radical de formule (IV) : 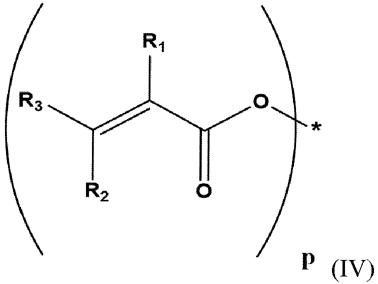 dans laquelle :
• R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
• (*) représente le point d'attachement du radical de formule (IV) à A,
∘ A représente un atome appartenant au groupe constitué par les métaux alcalino-terreux ou les métaux de transition, un atome de carbone, ou un groupement hydrocarboné en C₁-C₃₀ éventuellement interrompu et/ou substitué par un ou plusieurs hétéroatomes,
∘ A comprenant p valences libres, p ayant une valeur allant de 2 à 6,
∘ étant entendu que les 2 à 6 radicaux X sont identiques ou différents.

11. Article antivibratoire selon la revendication 10, dans lequel dans le dérivé d'acrylate de formule (III) :
∘ A représente un atome appartenant au groupe constitué par les métaux alcalino-terreux ou les métaux de transition, un atome de carbone ou un groupement hydrocarboné en C₁-C₁₃,
∘ A comprenant p valences libres, p ayant une valeur allant de 2 à 4,
∘ étant entendu que les 2 à 4 radicaux X sont identiques ou différents.

12. Article antivibratoire selon la revendication 10 ou 11, dans lequel R₁, R₂ et R₃ représentent indépendamment les uns des autres un atome d'hydrogène, un groupement méthyle ou un groupement éthyle.

13. Article antivibratoire selon l'une quelconque des revendications 10 à 12, dans lequel A représente un atome choisi dans le groupe constitué par Zn, Mg et Fe.

14. Article antivibratoire selon l'une quelconque des revendications précédentes, dans lequel le taux du co-agent de réticulation est compris dans un domaine allant de 1 à 20 pce, de préférence de 2 à 10 pce.

## Patentansprüche

1. Schwingungsdämpfender Gegenstand, umfassend mindestens ein Kautschukelement, das eine Kautschukzusammensetzung auf Basis von mindestens Folgendem umfasst:
- einer Elastomermatrix, die mindestens ein Copolymer umfasst, das Ethylen-Einheiten und 1,3-Dien-Einheiten enthält, wobei der molare Anteil der Ethylen-Einheiten in dem Copolymer in einem Bereich von mehr als 50 % bis 95 % liegt,
- einem verstärkenden Füllstoff, der mindestens einen Ruß umfasst, dessen spezifische BET-Oberfläche zwischen 5 und 110 m²/g liegt (gemessen gemäß ASTM-Norm D6556-10")
- einem Vernetzungssystem, umfassend mindestens ein Peroxid und ein Co-Vernetzungsmittel, das aus der Gruppe bestehend aus (Meth)acrylatverbindungen, Maleinimidverbindungen, Allylverbindungen, Vinylverbindungen und Mischungen davon ausgewählt ist, wobei der Gegenstand aus der Gruppe bestehend aus Kautschukstützen, Kautschukträgern, Kautschukhülsen, Kautschukkissen, Kautschuklagern, Kautschukdämpferscheiben, Kautschukschläuchen, Kautschukpfropfen und schwingungsdämpfenden Kautschukplatten ausgewählt ist.

2. Schwingungsdämpfender Gegenstand nach Anspruch 1, wobei es sich bei dem Copolymer, das Ethylen-Einheiten und 1,3-Dien-Einheiten enthält, um ein Copolymer von Ethylen und 1,3-Dien handelt.

3. Schwingungsdämpfender Gegenstand nach einem der vorhergehenden Ansprüche, wobei es sich bei den 1,3-Dien-Einheiten um 1,3-Butadien-Einheiten handelt.

4. Schwingungsdämpfender Gegenstand nach einem der vorhergehenden Ansprüche, wobei es sich bei dem Copolymer, das Ethylen-Einheiten und 1,3-Dien-Einheiten enthält, um ein statistisches Copolymer handelt.

5. Schwingungsdämpfender Gegenstand nach einem der vorhergehenden Ansprüche, wobei der Gehalt an Copolymer, das Ethylen-Einheiten und 1,3-Dien-Einheiten enthält, in einem Bereich von 30 bis 100 phe, vorzugsweise von 50 bis 100 phe, liegt.

6. Schwingungsdämpfender Gegenstand nach einem der vorhergehenden Ansprüche, wobei der Ruß eine spezifische BET zwischen 10 und 100 m²/g, vorzugsweise zwischen 20 und 80 m²/g, weiter bevorzugt zwischen 20 und 70 m²/g, aufweist.

7. Schwingungsdämpfender Gegenstand nach einem der vorhergehenden Ansprüche, wobei der Gehalt an Ruß zwischen 20 und 70 phe und vorzugsweise in einem Bereich von 30 bis 60 phe liegt.

8. Schwingungsdämpfender Gegenstand nach einem der vorhergehenden Ansprüche, wobei es sich bei dem Peroxid um ein organisches Peroxid handelt, das aus der Gruppe bestehend aus Dicumylperoxid, Aryl- oder Diarylperoxiden, Diacetylperoxid, Benzoylperoxid, Dibenzoylperoxid, Di-tert-butylperoxid, tert-Butylcumylperoxid, 2,5-Bis(tert-butylperoxy)-2,5-dimethylhexan, n-Butyl-4,4'-di(tert-butylperoxy)valerat, OO-(t-Butyl)-O-(2-ethylhexyl)monoperoxycarbonat, tert-Butylperoxyisopropylcarbonat, tert-Butylperoxybenzoat, tert-Butylperoxy-3,5,5-trimethylhexanoat, 1,3(4)-Bis(tert-butylperoxyisopropyl)benzol und Mischungen davon, vorzugsweise aus der Gruppe bestehend aus Dicumylperoxid, n-Butyl-4,4'-di(tert-butylperoxy)-valerat, OO-(t-Butyl)-O-(2-ethylhexyl)monoperoxycarbonat, tert-Butylperoxyisopropylcarbonat, tert-Butylperoxybenzoat, tert-Butylperoxy-3,5,5-trimethylhexanoat, 1,3(4)-Bis(tert-butylperoxyisopropyl)benzol und Mischungen davon, ausgewählt ist.

9. Schwingungsdämpfender Gegenstand nach einem der vorhergehenden Ansprüche, wobei der Peroxidgehalt in einem Bereich von 0,5 bis 10 phe, vorzugsweise von 1 bis 5 phe, liegt.

10. Schwingungsdämpfender Gegenstand nach einem der vorhergehenden Ansprüche, wobei das Co-Vernetzungsmittel ein Acrylatderivat der Formel (III) umfasst:
[X]p A (III)
in der:
∘ [X]p einem Rest der Formel (IV) entspricht: 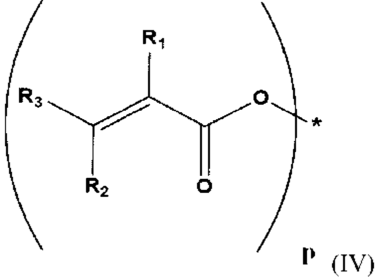 in der:
• R₁, R₂ und R₃ unabhängig für ein Wasserstoffatom oder eine C₁-C₈-Kohlenwasserstoffgruppe, die aus der Gruppe bestehend aus linearen, verzweigten oder cyclischen Alkylgruppen, Alkylarylgruppen, Arylgruppen und Aralkylgruppen ausgewählt ist und gegebenenfalls durch ein oder mehrere Heteroatome unterbrochen ist, stehen, wobei R₂ und R₃ zusammen einen nichtaromatischen Ring bilden können,
• (*) für den Anbindungspunkt des Rests der Formel (IV) an A steht,
∘ A für ein Atom, das zu der Gruppe bestehend aus Erdalkalimetallen oder Übergangsmetallen gehört, ein Kohlenstoffatom oder eine C₁-C₃₀-Kohlenwasserstoffgruppe, die gegebenenfalls durch ein oder mehrere Heteroatome unterbrochen und/oder substituiert ist, steht,
∘ A p freie Valenzen umfasst, wobei p einen Wert im Bereich von 2 bis 6 hat,
∘ mit der Maßgabe, dass die 2 bis 6 Reste X gleich oder verschieden sind.

11. Schwingungsdämpfender Gegenstand nach Anspruch 10, wobei in dem Acrylatderivat der Formel (III):
∘ A für ein Atom, das zu der Gruppe bestehend aus Erdalkalimetallen oder Übergangsmetallen gehört, ein Kohlenstoffatom oder eine C₁-C₁₃-Kohlenwasserstoffgruppe steht,
∘ A p freie Valenzen umfasst, wobei p einen Wert im Bereich von 2 bis 4 hat,
∘ mit der Maßgabe, dass die 2 bis 4 Reste X gleich oder verschieden sind.

12. Schwingungsdämpfender Gegenstand nach Anspruch 10 oder 11, wobei R₁, R₂ und R₃ unabhängig voneinander für ein Wasserstoffatom, eine Methylgruppe oder eine Ethylgruppe stehen.

13. Schwingungsdämpfender Gegenstand nach einem der Ansprüche 10 bis 12, wobei A für ein Atom steht, das aus der Gruppe bestehend aus Zn, Mg und Fe ausgewählt ist.

14. Schwingungsdämpfender Gegenstand nach einem der vorhergehenden Ansprüche, wobei der Gehalt an Co-Vernetzungsmittel in einem Bereich von 1 bis 20 phe, vorzugsweise von 2 bis 10 phe, liegt.

## Claims

1. Anti-vibration article comprising at least one rubber element that comprises a rubber composition based on at least:
- an elastomeric matrix comprising at least one copolymer containing ethylene units and 1,3-diene units, the molar fraction of the ethylene units in the copolymer being within a range extending from more than 50% to 95%,
- a reinforcing filler comprising at least one carbon black having a BET specific surface area that is between 5 and 110 m²/g (measured in accordance with the standard ASTM D6556-10"),
- a crosslinking system comprising at least one peroxide and a co-crosslinking agent selected from the group consisting of (meth)acrylate compounds, maleimide compounds, allyl compounds, vinyl compounds and mixtures thereof,
said article being selected from the group consisting of rubber supports, rubber mounts, rubber bushings, rubber pads, rubber bearings, rubber damper pulleys, rubber pipes, rubber plugs and rubber anti-vibration panels.

2. Anti-vibration article according to Claim 1, wherein the copolymer containing ethylene units and 1,3-diene units is a copolymer of ethylene and of 1,3-diene.

3. Anti-vibration article according to either one of the preceding claims, wherein the 1,3-diene units are 1,3-butadiene units.

4. Anti-vibration article according to any one of the preceding claims, wherein the copolymer containing ethylene units and 1,3-diene units is a random copolymer.

5. Anti-vibration article according to any one of the preceding claims, wherein the content of the copolymer containing ethylene units and 1,3-diene units is within a range extending from 30 to 100 phr, preferably from 50 to 100 phr.

6. Anti-vibration article according to any one of the preceding claims, wherein the carbon black has a specific BET of between 10 and 100 m²/g, preferably between 20 and 80 m²/g, more preferably between 20 and 70 m²/g.

7. Anti-vibration article according to any one of the preceding claims, wherein the content of the carbon black is between 20 and 70 phr, preferably within a range extending from 30 to 60 phr.

8. Anti-vibration article according to any one of the preceding claims, wherein the peroxide is an organic peroxide selected from the group consisting of dicumyl peroxide, aryl or diaryl peroxides, diacetyl peroxide, benzoyl peroxide, dibenzoyl peroxide, di-tert-butyl peroxide, tert-butyl cumyl peroxide, 2,5-bis(tert-butylperoxy)-2,5-dimethylhexane, n-butyl 4,4'-di(tert-butylperoxy)valerate, OO-(t-butyl) O-(2-ethylhexyl) monoperoxycarbonate, tert-butyl peroxyisopropyl carbonate, tert-butyl peroxybenzoate, tert-butyl peroxy-3,5,5-trimethylhexanoate, 1,3(4)-bis(tert-butylperoxyisopropyl)benzene and mixtures thereof, preferably from the group consisting of dicumyl peroxide, n-butyl 4,4'-di(tert-butylperoxy)valerate, OO-(t-butyl) O-(2-ethylhexyl) monoperoxycarbonate, tert-butyl peroxyisopropyl carbonate, tert-butyl peroxybenzoate, tert-butyl peroxy-3,5,5-trimethylhexanoate, 1,3(4)-bis(tert-butylperoxyisopropyl)benzene and mixtures thereof.

9. Anti-vibration article according to any one of the preceding claims, wherein the content of peroxide is within a range extending from 0.5 to 10 phr, preferably from 1 to 5 phr.

10. Anti-vibration article according to any one of the preceding claims, wherein the co-crosslinking agent comprises an acrylate derivative of formula (III):
[X]p A (III)
in which:
∘ [X]p corresponds to a radical of formula (IV): 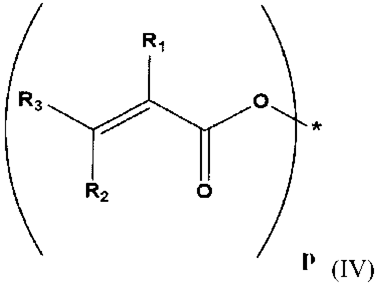 in which:
• R₁, R₂ and R₃ independently represent a hydrogen atom or a C₁-C₈ hydrocarbon group selected from the group consisting of alkyl groups which are linear, branched or cyclic, alkylaryl groups, aryl groups and aralkyls, and which are optionally interrupted by one or more heteroatoms, it being possible for R₂ and R₃ together to form a non-aromatic ring,
• (*) represents the point of attachment of the radical of formula (IV) to A,
∘ A represents an atom belonging to the group consisting of alkaline earth metals or transition metals, a carbon atom or a C₁-C₃₀ hydrocarbon group, optionally interrupted and/or substituted by one or more heteroatoms,
∘ A comprising p free valencies, p having a value ranging from 2 to 6,
∘ it being understood that the 2 to 6 X radicals are identical or different.

11. Anti-vibration article according to Claim 10, wherein, in the acrylate derivative of formula (III):
∘ A represents an atom belonging to the group consisting of alkaline earth metals or transition metals, a carbon atom or a C₁-C₁₃ hydrocarbon group,
∘ A comprising p free valencies, p having a value ranging from 2 to 4,
∘ it being understood that the 2 to 4 X radicals are identical or different.

12. Anti-vibration article according to Claim 10 or 11, wherein R₁, R₂ and R₃ represent, independently of one another, a hydrogen atom, a methyl group or an ethyl group.

13. Anti-vibration article according to any one of Claims 10 to 12, wherein A represents an atom selected from the group consisting of Zn, Mg and Fe.

14. Anti-vibration article according to any one of the preceding claims, wherein the content of the co-crosslinking agent is within a range extending from 1 to 20 phr, preferably from 2 to 10 phr.
